# FASCICULE DE BREVET EUROPEEN

(11) **EP 2 716 161 B1**
(45) Date de publication et mention de la délivrance du brevet: **19.07.2017**
(21) Numéro de dépôt: 13186109.8
(22) Date de dépôt: 26.09.2013
(51) Int. Cl.: A23B 5/005, A23L 15/00, B65D 85/32

(54) **Procédé de préparation et d'emballage d'oeufs pochés, et produit correspondant**
Herstellungs- und Verpackungsverfahren von pochierten Eiern, und entsprechendes Produkt
Method for preparing and packaging poached eggs, and corresponding product

(30) Priorité: 04.10.2012 FR 1259453
(43) Date de publication de la demande: 09.04.2014
(73) Titulaire: Ovoteam, 56500 Naizin (FR)
(72) Inventeur: Detre, Catherine, 22400 Lamballe (FR); Galet, Olivier, 22950 Trégueux (FR); Bianeis, Marine, 35800 Dinard (FR)
(74) Mandataire: Vidon Brevets & Stratégie

(56) Documents cités:
- US-A- 3 851 571
- Inovo: "Les oeufs pochés moulés", , 6 septembre 2004 (2004-09-06), XP055065812, Extrait de l'Internet: URL:http://inovo.blogspirit.com/media/01/0 0/5bfc2760b71168c39c36bdb483f82123.pdf [extrait le 2013-06-07]
- Inovo: "Seau de 60 oeufs pochés", , 9 décembre 2005 (2005-12-09), XP055065810, Extrait de l'Internet: URL:http://inovo.blogspirit.com/files/OP_4 3_53_Seau_de_60.pdf [extrait le 2013-06-07]
- Ovipac: "Oeufs poches 43/53 en plaques", , 26 septembre 2008 (2008-09-26), XP055065773, Extrait de l'Internet: URL:http://www.ovoteam.net/uploads/pdf/Ovi pac_Standard_oeufsPoches4353Plaques.pdf [extrait le 2013-06-07]
- Coupdepouce.Com: "Oeufs pochés à la bénédictine", , 20 décembre 2011 (2011-12-20), XP055065835, Extrait de l'Internet: URL:http://www.coupdepouce.com/recettes-cu isine/dejeuners/brunchs/oeufs-a-la-benedic tine/r/4047 [extrait le 2013-06-07]
- Anonymous: "Hard-Boiled Eggs Product Description", Mintel GNPD, 1 July 2011 (2011-07-01), XP055337780, Retrieved from the Internet: URL:http://www.gnpd.com/sinatra/recordpage /1558380/ [retrieved on 2017-01-23]

## Description

Le domaine de l'invention est celui des ovoproduits, ou produits transformés à base d'oeufs, destinés notamment, mais non exclusivement, au grand public, et distribués par exemple par les grandes et moyennes surfaces.

Plus précisément, l'invention concerne la fourniture d'oeufs pochés, sous une forme adaptée notamment au grand public, et à une distribution en grandes et moyennes surfaces (GMS), ou à une utilisation comme ingrédient de la restauration commerciale.

Traditionnellement, les oeufs pochés sont obtenus en déposant le contenu d'un oeuf dans de l'eau bouillante. Cette opération n'est cependant pas aussi simple qu'il paraît, puisqu'il ne faut bien sûr pas casser la boule de jaune d'oeuf, et faire en sorte que le blanc entoure le jaune de façon sensiblement homogène.

Il n'est par ailleurs pas toujours aisé de maîtriser le temps de cuisson, pour obtenir un jaune coulant, le temps de cuisson dépendant en outre du calibre de l'oeuf. L'usage de l'eau bouillante introduit en outre des risques de brûlure. Enfin, l'ouverture de l'oeuf peut entraîner la présence de morceaux de coquille, que le consommateur peut ingérer.

En tout état de cause, on comprend que ces manipulations ne permettent pas de consommer un oeuf poché en dehors d'une préparation à domicile (par exemple sur son lieu de travail).

Le consommateur devrait en plus anticiper sa consommation d'oeufs pochés, puisque la réalisation d'oeufs pochés nécessite de préférence l'utilisation d'oeufs extra-frais. Ceci permet en effet d'obtenir une quantité de blanc épais suffisante pour recouvrir et envelopper correctement la boule de jaune lors de la cuisson (la quantité de blanc épais dépend en effet de la fraîcheur de l'oeuf).

Les oeufs pochés traditionnellement ne peuvent par ailleurs pas être conservés longtemps, d'autant plus que le mode de cuisson à domicile ne garantit une pasteurisation à coeur, nécessaire pour assurer une absence de salmonelles.

Des solutions ont été proposées, pour produire des oeufs pochés cuits dans des emballages particuliers, définissant une alvéole de taille adaptée pour chacun des oeufs. Cette approche permet de fournir des oeufs pochés calibrés, et efficacement maintenus dans leur emballage, pour éviter qu'ils ne se cassent. Cependant, ce type de cuisson dans l'emballage ne permet pas d'obtenir les mêmes caractéristiques qu'avec une cuisson traditionnelle directement dans l'eau bouillante, en termes de forme notamment, puisque cette cuisson entraîne une forme moulée, non caractéristique d'un oeuf poché traditionnel. Cette solution est notamment décrite dans les documents Inovo : « Les oeufs pochés moulés », 6 septembre 2004, XP055065812 et Ovipac : « Oeufs pochés 43/53 en plaques », 26 septembre 2008, XP055065773*.*

Une des difficultés de la production des oeufs pochés est qu'ils ne doivent pas être cassés (la boule de jaune liquide doit être conservé dans l'enveloppe de blanc), notamment pendant le transport et leur stockage, ce qui justifie ce système d'emballage à base d'alvéoles unitaires.

Une autre approche, utilisée dans les milieux industriels, consiste à placer les oeufs pochés dans des seaux remplis d'un liquide de couverture, comprenant par exemple du sel et des acides. Cette approche, notamment décrite dans le document Inovo : « Seau de 60 oeufs pochés », 9 décembre 2005, XP055065810*,* n'est bien sûr pas adaptable à une utilisation par le grand public, tant pour des raisons de présentation que d'utilisation. En effet, la présence d'acides nécessaires pour assurer la conservation peut polluer le goût natif de l'oeuf, et les oeufs pochés transportés et stockés dans le liquide de couverture doivent donc être rincés pour éliminer autant que faire se peut les goûts acides, avant utilisation.

L'invention a notamment pour objectif de proposer une approche nouvelle, palliant au moins certains de ces inconvénients.

Ces objectifs, ainsi que d'autres qui apparaîtront par la suite, sont atteints à l'aide d'un procédé de préparation et d'emballage d'au moins deux oeufs pochés, sous une forme adéquate au transport et à une distribution en grandes et moyennes surfaces, comprenant les étapes suivantes :
- cassage de chacun desdits oeufs ;
- pochage desdits oeufs dans un premier bain d'eau chaude ;
- refroidissement et maturation desdits oeufs pochés dans au moins un deuxième bain ;
- égouttage et tri desdits oeufs pochés ;
- insertion de chacun desdits au moins deux oeufs pochés dans un emballage ne contenant aucun liquide ajouté, les dimensions intérieures de l'emballage étant choisies de façon que lesdits oeufs pochés étant placés en contact les uns avec les autres et assurent une fonction d'amortissement;
- fermeture dudit emballage à l'aide d'un opercule ;
- pasteurisation à température contrôlée ;
- refroidissement.

Ainsi, il est possible de fournir des oeufs pochés similaires à des produits traditionnels compatibles avec une commercialisation via les GMS, c'est-à-dire possédant une longue durée de conservation, notamment à température réfrigérée (par exemple au moins 30 jours), dans de bonnes conditions de présentation et de qualité.

Notamment, les oeufs pochés ne sont pas conservés dans un liquide de couverture contenant un acide ou tout autre conservateur. L'absence de liquide n'exclut cependant pas, selon l'invention, la présence éventuelle d'exsudat.

De façon contre-intuitive, les inventeurs ont constaté que le fait de placer les oeufs pochés les uns contre les autres, dans un récipient qui peut par exemple prendre la forme d'un bol, et non dans des logements unitaires spécifiques, assure une meilleure protection physique de l'intégrité des oeufs pochés, ceux-ci jouant le rôle, les uns par rapport aux autres, d'éléments amortissants.

Les oeufs utilisés peuvent notamment être des oeufs de poule, mais plus généralement des oeufs de tout autre oiseau produisant des oeufs consommables (cane, caille, ...). Dans ce cas, bien sûr, les conditions préférentielles (températures et durées de traitement en particulier) décrites par la suite, et qui concerne plus spécifiquement les oeufs de poule, devront être adaptées.

Selon un mode de réalisation particulier du procédé de l'invention, ladite étape de pochage comprend une mise en mouvement dudit premier bain.

Selon un mode de réalisation particulier du procédé de l'invention, ladite étape de refroidissement et de maturation met en oeuvre au moins un bain d'eau froide, additionnée le cas échéant d'au moins un agent de maturation.

Le ou les deuxièmes bains de refroidissement et de maturation permettent dans ce cas une amélioration organoleptique (par exemple avec du sel) et/ou un renforcement du gel, à l'aide de minéraux, et/ou un enrichissement nutritionnel (par exemple avec du calcium), selon les objectifs visés.

Selon un mode de réalisation particulier du procédé de l'invention, lesdits premier et deuxième(s) bains présentent des compositions différentes.

Ils peuvent notamment contenir de sels minéraux (NaCl, KCl, CaCl2, ...), et/ou des acides ou des acidifiants (vinaigre, jus de citron...).

Selon un mode de réalisation particulier du procédé de l'invention, ladite étape de fermeture se fait sous atmosphère de protection.

Selon un mode de réalisation particulier du procédé de l'invention, ladite étape de pasteurisation dans l'emballage comprend une étape de chauffage à une température supérieure à 60° C en tout point desdits oeufs pochés.

Selon un mode de réalisation particulier du procédé de l'invention, ladite étape de chauffage est suivie d'une étape de pré-refroidissement dans l'appareil assurant ledit chauffage.

Selon un mode de réalisation particulier du procédé de l'invention, ladite étape de refroidissement se fait à une température inférieure à 4° C, sans congélation de surface.

L'invention concerne également un produit obtenu selon le procédé de l'une quelconque des revendications 1-7, ledit produit comprenant un emballage contenant au moins deux oeufs pochés, adapté au transport et à une distribution en grandes et moyennes surfaces, obtenu selon le procédé décrit ci-dessus et dont la surface intérieure dudit emballage est lisse et dont la forme intérieure est adaptée pour maintenir lesdits oeufs pochés les uns contre les autres, sans liquide ajouté, de façon à assurer une fonction d'amortissement.

D'autres caractéristiques et avantages de l'invention apparaitront à la lecture de la description suivante d'un mode de réalisation de l'invention, donné à titre de simple exemple illustratif et non limitatif, et des dessins annexés, parmi lesquels :
- les figures 1A et 1B illustrent, respectivement en coupe et en vue de dessus, un produit selon un mode de réalisation de l'invention ;

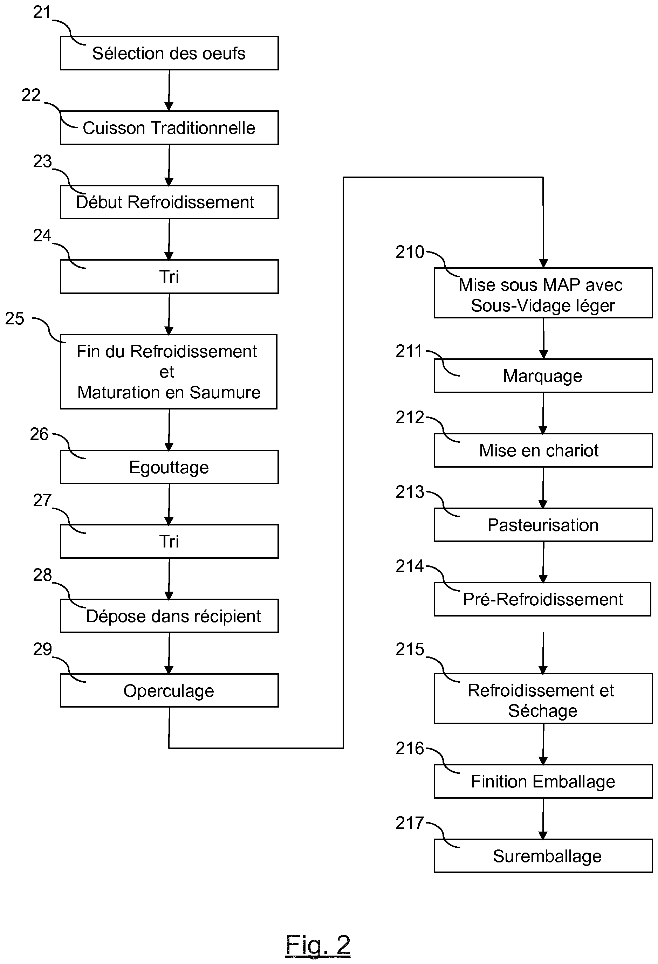

- la figure 2 présente un organigramme d'un exemple de procédé permettant de fabriquer le produit de la figure 1.

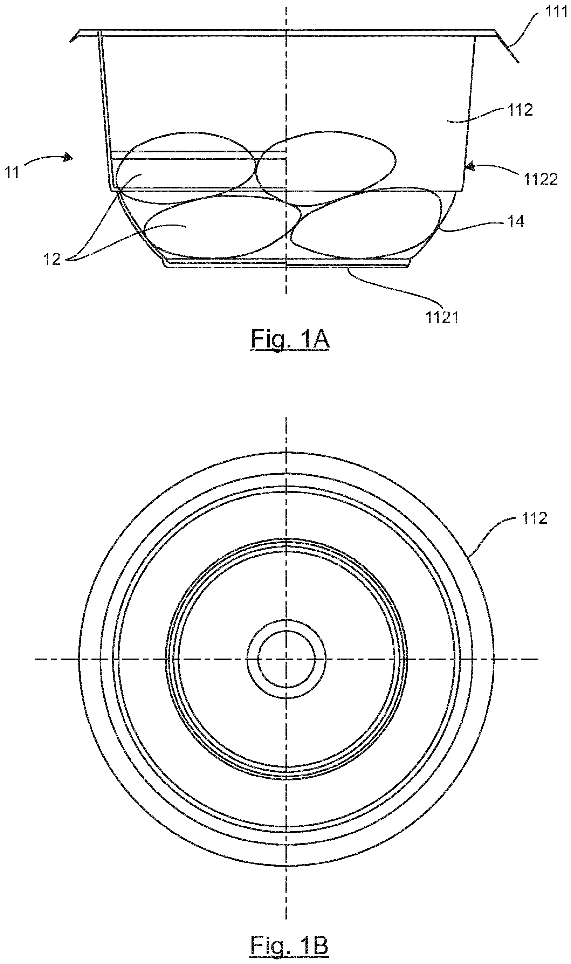

Les figures 1A et 1B illustrent donc un exemple de produit selon l'invention, comprenant d'une part un emballage 11, et d'autre part au moins deux oeufs pochés 12 (par exemple entre deux et six oeufs, quatre dans le mode de réalisation illustré).

L'emballage 11 est fermé par un opercule 111, solidarisé au bord supérieur d'un récipient 112, par exemple par soudage ultrason ou thermocollage. Cet opercule est préférentiellement pelable.

Le récipient 112, par exemple en matière plastique transparente, présente une forme générale de bol, avec un fond 1121 et un bord 1122 formant sensiblement, au moins sur une partie de sa hauteur, une portion de sphère 14. D'autres formes peuvent être envisagées, dès lors qu'elles ne permettent pas une liberté de mouvement trop importante des oeufs pochés. Cette forme doit maintenir les oeufs les uns contre les autres.

On peut ainsi imaginer un emballage parallélépipédique, dès lors qu'il est dimensionné de façon que les oeufs s'amortissent les uns sur les autres

Il est en revanche important que la surface soit lisse (absence de surface rugueuse), pour que les oeufs assurent efficacement leur fonction auto-amortissante. Les dimensions intérieures de l'emballage sont choisies de façon adaptée de façon que les oeufs pochés soient calés les uns contre les autres et s'amortissent les uns contre les autres.

Il n'y a pas, dans l'emballage, de liquide ajouté, et notamment de liquide de couverture. Seules, le cas échéant, des gouttelettes d'exsudats peuvent être présentes.

Les oeufs pochés 12 sont déposés dans le récipient 112, les uns contre les autres. Les inventeurs ont observé que, de façon surprenante, il n'est pas nécessaire d'isoler chaque oeuf poché dans un logement spécifique. Au contraire, le fait que les oeufs pochés soient placés librement, les uns contre les autres font que ceux-ci assurent, les uns par rapport aux autres, une fonction d'amortissement, qui permet d'obtenir, en combinaison avec la forme du récipient 112, une bonne résistance aux chocs qui peuvent apparaître pendant le transport et la conservation.

On décrit maintenant, à titre d'exemple, un procédé permettant d'obtenir un tel produit, formé de l'emballage et de son contenu, à savoir plusieurs oeufs pochés, dans des conditions permettant une longue conservation (par exemple d'au moins 30 jours) dans de bonnes conditions, en termes de présentation et de conservation de l'intégrité des oeufs pochés et de leur qualité gustative.

On sélectionne tout d'abord (21) des oeufs calibrés, présentant par exemple un poids de 50 g ± 3 g, pour obtenir des oeufs pochés homogènes.

Ces oeufs sont cassés, et leur contenu est déposé (22) dans un bain de cuisson, afin d'obtenir des oeufs pochés traditionnels, par une cuisson dans un premier bain, bouillant. Cette approche permet d'obtenir une forme traditionnelle d'oeufs pochés, le blanc entourant de façon sensiblement homogène le jaune. Pour faciliter la mise en forme, des moyens de mise en mouvement de ce premier bain peuvent être mis en oeuvre.

On effectue ensuite un premier refroidissement (23), en plaçant les oeufs pochés dans un deuxième bain, d'eau froide, à une température par exemple de l'ordre de 4°C. Ce bain peut, le cas échéant, contenir des composés sélectionnés en fonction des besoins, tels que du sel ou calcium.

Un tri 24 peut être effectué, en sortie de ce premier refroidissement, afin de détecter d'éventuels résidus de coquilles et/ou écarter les oeufs pochés ayant un aspect fragile, par exemple parce que la boule de jaune est décentrée.

Ensuite, selon ce mode de réalisation, les oeufs pochés sont placés (25) dans un troisième bain additionné de sel, par exemple pendant au moins 15 minutes dans un bain ne dépassant pas 3% de NaCl (la durée étant fonction de la concentration en NaCl).

Cette étape 25 peut être combinée avec l'étape de refroidissement 23, ou être une étape complémentaire. Elle assure une maturation qui fige la texture du blanc, apporte des qualités organoleptiques (léger goût salé) et/ou améliore les qualités nutritionnelles.

Ensuite, les oeufs pochés sont sortis de la saumure, et égouttés (26).

Un second tri 27 (en complément ou en alternative du premier tri 24) pour identifier d'éventuels résidus de coquilles peut être mis en oeuvre (généralement, une seule des deux étapes de tri 24 et 27 sera mise en oeuvre). Le premier et/ou le second tri peut par exemple être un tri visuel et/ou un tri automatisé, mettant par exemple en oeuvre un traitement optique ou par rayons X.

Les oeufs pochés sont alors déposés (28) dans leur récipient en forme de bol (figure 1a et 1b), de façon que chaque bol contienne la quantité souhaitée (par exemple quatre oeufs). Ceux-ci sont placés "en vrac" (c'est-à-dire sans logement spécifique unitaire, dans le bol) les uns contre les autres.

Un opercule pelable est rapporté sur le bol, et solidarisé (29) à celui-ci, par exemple par un traitement par ultrason ou thermocollage.

Une mise sous atmosphère protectrice 210 est ensuite mise en oeuvre, avec le cas échéant un léger sous-vidage.

Un marquage 211 peut être effectué, par exemple pour mentionner une date et un lieu d'emballage, et/ou un mode de réchauffage.

Ensuite, si le traitement est un traitement par lots ("en batch"), les bols contenant les oeufs pochés sont mis en chariot (212).

Une pasteurisation listéricide et salmonécide 213, détruisant également autant que faire se peut tout autre pathogène connu pour cette application, est effectuée, par exemple à une température supérieure à 60° C, notamment comprise entre 60 et 65°C en tout point de l'oeuf.

Ces températures permettent de maîtriser la viscosité du jaune. Pour obtenir un produit avec un coeur coulant, on évitera de dépasser 65°C à coeur, de préférence 63°C. Au delà, il est possible d'obtenir des produits différents, au niveau de la texture du jaune. Par exemple, avec des températures de l'ordre de 63 à 75°C, on peut obtenir un jaune confit.

Lors des opérations d'operculage et de mise sous atmosphère modifiée, un exsudat est toléré.

Ensuite, un pré-refroidissement 214, dans l'appareil ayant assuré la pasteurisation, est effectué, et suivi d'un refroidissement et séchage 215, à une température inférieure à 4°C, sans congélation de surface, dans une cellule froide.

Ensuite, on finalise l'emballage (216), par exemple en rapportant un couvercle et/ou un fourreau.

Enfin, les produits ainsi obtenus sont regroupés et sur emballés (217) en vue de leur transport et de leur conservation.

Ce procédé de fabrication est bien sur donné à titre d'exemple non limitatif, et diverses adaptations peuvent être envisagées, pour obtenir un produit conforme à l'invention.

## Revendications

1. Procédé de préparation et d'emballage d'au moins deux oeufs pochés, sous une forme adaptée au transport et à une distribution en grandes et moyennes surfaces, comprenant les étapes suivantes :
- cassage de chacun desdits oeufs ;
- pochage desdits oeufs dans un premier bain d'eau chaude ;
- refroidissement et maturation desdits oeufs pochés dans au moins un deuxième bain ;
- égouttage et tri desdits oeufs pochés ;
- insertion de chacun desdits oeufs pochés dans un emballage ne contenant aucun liquide ajouté, les dimensions intérieures de l'emballage étant choisies de façon que lesdits oeufs pochés soient placés en contact les uns avec les autres et assurent une fonction d'amortissement ;
- fermeture dudit emballage à l'aide d'un opercule ;
- pasteurisation à température contrôlée ;
- refroidissement.

2. Procédé selon la revendication 1, **caractérisé en ce que** ladite étape de refroidissement et de maturation met en oeuvre au moins un bain d'eau froide, additionnée le cas échéant d'au moins un agent de maturation.

3. Procédé selon l'une quelconque des revendications 1 et 2, **caractérisé en ce que** ladite étape de fermeture se fait sous atmosphère de protection.

4. Procédé selon l'une quelconque des revendications 1 à 3, **caractérisé en ce que** ladite étape de pasteurisation comprend une étape de chauffage à une température supérieure à 60° C en tout point desdits oeufs pochés.

5. Procédé selon la revendication 4, **caractérisé en ce que** ladite étape de chauffage est suivie d'une étape de pré-refroidissement dans l'appareil assurant ledit chauffage.

6. Procédé selon l'une quelconque des revendications 1 à 5, **caractérisé en ce que** ladite étape de refroidissement se fait à une température inférieure à 4°C en tout point desdits oeufs pochés, sans congélation de surface.

7. Procédé selon l'une quelconque des revendications 1 à 6, **caractérisé en ce que** ladite étape de pochage comprend une mise en mouvement dudit premier bain.

8. Produit obtenu selon le procédé de l'une quelconque des revendications 1-7, ledit produit comprenant un emballage contenant au moins deux oeufs pochés, adapté au transport et à une distribution en grandes et moyennes surfaces, **caractérisé en ce que** la surface intérieure dudit emballage est lisse et la forme intérieure dudit emballage est adaptée pour maintenir lesdits oeufs pochés les uns contre les autres, sans liquide ajouté, de façon à assurer une fonction d'amortissement.

## Patentansprüche

1. Verfahren zur Herstellung und Verpackung von mindestens zwei pochierten Eiern, in einer für den Transport und Verkauf in Supermärkten, Verbrauchermärkten und SB-Warenhäusern geeigneten Form, das folgende Schritte umfasst:
- Aufschlagen von jedem der Eier;
- Pochieren der Eier in einem ersten Bad mit heißem Wasser;
- Abkühlen und Reifenlassen der pochierten Eier in mindestens einem zweiten Bad;
- Abtropfenlassen und Sichten der pochierten Eier;
- Einbringen von jedem der pochierten Eier in eine Verpackung, die keinerlei zugesetzte Flüssigkeit enthält, wobei die Innenabmessungen der Verpackung derart ausgewählt werden, dass die pochierten Eier einander berührend platziert sind und eine Dämpfungsfunktion erfüllen;
- Verschließen der Verpackung mit einem Deckel;
- Pasteurisieren bei kontrollierter Temperatur;
- Abkühlen.

2. Verfahren nach Anspruch 1, **dadurch gekennzeichnet, dass** beim Schritt des Abkühlens und Reifenlassens mindestens ein Bad mit kaltem Wasser verwendet wird, dem gegebenenfalls mindestens ein Reifungsmittel zugesetzt wird.

3. Verfahren nach einem der Ansprüche 1 und 2, **dadurch gekennzeichnet, dass** der Schritt des Verschließens unter Schutzatmosphäre erfolgt.

4. Verfahren nach einem der Ansprüche 1 bis 3, **dadurch gekennzeichnet, dass** der Schritt der Pasteurisierung einen Schritt zum Erwärmen auf eine Temperatur über 60 °C an jeder Stelle der pochierten Eier umfasst.

5. Verfahren nach Anspruch 4, **dadurch gekennzeichnet, dass** nach dem Schritt des Erwärmens ein Schritt zum Vorkühlen in dem für die Erwärmung sorgenden Gerät folgt.

6. Verfahren nach einem der Ansprüche 1 bis 5, **dadurch gekennzeichnet, dass** der Schritt des Abkühlens bei einer Temperatur unter 4 °C an jeder Stelle der pochierten Eier erfolgt, ohne Gefrieren der Oberfläche.

7. Verfahren nach einem der Ansprüche 1 bis 6, **dadurch gekennzeichnet, dass** der Schritt des Pochierens ein Bewegen des ersten Bads umfasst.

8. Produkt, das gemäß dem Verfahren nach einem der Ansprüche 1 bis 7 erhalten wird, wobei das Produkt eine Verpackung umfasst, die mindestens zwei pochierte Eier enthält, die für den Transport und Verkauf in Supermärkten, Verbrauchermärkten und SB-Warenhäusern geeignet ist, **dadurch gekennzeichnet, dass** die Innenfläche der Verpackung glatt ist und die innere Form der Verpackung so ausgelegt ist, dass die pochierten Eier ohne zusätzliche Flüssigkeit aneinander gehalten werden, damit eine Dämpfungsfunktion erfüllt wird.

## Claims

1. Method for preparing and packaging at least two poached eggs, in a form suitable for transport and for distribution in hypermarkets and supermarkets, comprising the following steps:
- breaking each of the said eggs;
- poaching the said eggs in a first hot water bath;
- cooling and maturing the said poached eggs in at least one second bath;
- draining and sorting the said poached eggs;
- inserting each of the said poached eggs into a packaging containing no added liquid, the interior dimensions of the packaging being chosen in such a way that the said poached eggs are placed in contact with each other and perform a cushioning function;
- sealing the said packaging using a lid;
- pasteurizing at a controlled temperature;
- cooling.

2. Method according to Claim 1, **characterised in that** the said cooling and maturing step involves at least one cold water bath, to which at least one maturing agent is added if necessary.

3. Method according to either one of Claims 1 and 2, **characterised in that** the said sealing step is performed in a protective atmosphere.

4. Method according to any one of Claims 1 to 3, **characterised in that** the said pasteurizing step comprises a step of heating the said poached eggs in their entirety to a temperature of more than 60 °C.

5. Method according to Claim 4, **characterised in that** the said heating step is followed by a step of precooling in the apparatus providing the said heating.

6. Method according to any one of Claims 1 to 5, **characterised in that** the said cooling step is performed on the said poached eggs in their entirety at a temperature of less than 4°C, without surface freezing.

7. Method according to any one of Claims 1 to 6, **characterised in that** the said poaching step comprises the act of moving the said first bath.

8. Product obtained according to the method of any one of Claims 1 to 7, the said product comprising a packaging containing at least two poached eggs, suitable for transport and for distribution in hypermarkets and supermarkets, **characterised in that** the interior surface of the said packaging is smooth and the interior shape of the said packaging is designed to keep the said poached eggs against each other, without added liquid, in such a way that they perform a cushioning function.
